# EUROPEAN PATENT APPLICATION

(11) **EP 0 636 429 A2**
(43) Date of publication of application: **01.02.1995**
(21) Application number: 94201837.5
(22) Date of filing: 28.06.1994
(51) Int. Cl.: B09B 3/00, A62D 3/00

(54) **Process for recovering expanding agents of chlorofluoroalkane type incorporated into expanded polymeric matrices for recycling**

(30) Priority: 30.06.1993 IT MI931402
(71) Applicant: ENICHEM S.p.A., I-20124 Milano (IT)
(72) Inventor: Poidomani, Marcello, I-97100 Ragusa (IT); Filardo, Giuseppe, I-90144 Palermo (IT); Gambino, Salvatore, I-90146 Palermo (IT); Silvestri, Giuseppe, I-90141 Palermo (IT); Fornarotto, Giuseppe, I-95030 Mascalucia, Catania (IT)
(74) Representative: Fusina, Gerolamo

(57) **Abstract**

A process for recovering expanding agents of chlorofluoroalkane (CFC) type adsorbed on expanded polymeric matrices consisting essentially of rigid polyurethane foams for recycling, comprising treating said foams in granular form with a gas consisting essentially of carbon dioxide, under supercritical conditions.

## Description

This invention relates to a process for recovering expanding agents of chlorofluoroalkane (CFC, HCFC) type incorporated into expanded polymeric matrices for recycling.

More particularly, the invention relates to a process for recovering low boiling chlorofluoroalkanes and/or hydrochlorofluoroalkanes adsorbed on rigid polyurethane foams for recycling. Ecological and environmental considerations have required the problem of the disposal of plastics materials present in solid urban refuse to be seriously considered.

In Italy the production of solid urban refuse currently increases by about 1% per year and is now estimated at 10-20 million tonnes per year, of which 1.4 million tonnes (about 7.5%) represents plastics materials.

Recycling this large quantity of material would enable its residual use value to be recovered, with undoubted economical advantages and in particular a reduction in the overall volume of refuse and in the consumption of virgin material. There would also be the possibility of recovering its energy content when at the end of its second life cycle it is incinerated in a furnace using a suitable heat recovery method.

Of those plastics materials currently in use, flexible and rigid polyurethane foams are of considerable importance, their consumption, essentially in the automobile furnishing and thermal insulation sectors, being in continuous increase and representing about 63% of the European expanded polymer market.

The recycling and reuse of this particular class of material, either as manufacturing waste or as refuse on termination of its life cycle, involves finely grinding the material and using it either as an inert filler for producing other polyurethanes, in particular by the RRIM method, or as an intermediate in the production of raw materials (polyols) by glycolysis or petrochemical intermediates by pyrolysis.

Polyurethane foams are prepared by reacting a formulated polyol with a polyisocyanate, in particular 2,4/2,6-toluenediisocyanate (TDI) or 4,4'-diphenylmethanediisocyanate (MDI) and higher homologues or their modifications, using as expanding agent monofluorotrichloromethane known by the experts of the art as CFC 11 or other chlorine-containing halogenated or hydrohalogenated hydrocarbons.

Some of these expanding agents, in particular CFC 11, were included in the Montreal protocol in the list of chlorofluoroalkanes considered damaging to the environment by contributing to the alteration and destruction of the ozone layer present in the stratosphere. Other expanding agents such as difluoromonochloromethane are under discussion as they have an ODP (ozone depletion potential) greater than zero. It has therefore become necessary to gradually supplant them.

One method currently followed is the general one of expanding with CO₂ originating essentially from the isocyanate-water reaction, even if this method has certain drawbacks.

However, whereas for flexible polyurethane foams the drawbacks associated with the use of large water quantities have been overcome by suitably correcting the formulations, in the case of rigid foams the drawbacks are still present, this having delayed the replacement of CFCs or HCFCs, which are still used in large quantities in this particular sector.

These drawbacks are essentially the following:
- higher initial thermal conductivity;
- faster increase in thermal conductivity with time because of the greater polymer CO₂ permeability with consequent entry of air;
- dimensional instability of the foam when hot;
- greater surface friability with consequent problems of adhesion to the various substrates;
- a more exothermic polymerization reaction with consequent deformation of manufactured articles;
- greater isocyanate consumption.

Consequently the recycling of rigid polyurethane foams, requiring them to be ground, is difficult in that grinding results in the release of CFCs or HCFCs, with consequent environmental problems. Currently used methods involve the use of grinding/crushing in controlled pressure environments, with recovery of the gaseous phase released during the size reduction. However, the effectiveness of these processes does not solve the problem of environmental pollution because as the foams are generally aged, even if they are reduced to a powder having a particle size of the order of 100 microns they still contain a significant quantity of adsorbed CFCs or HCFCs, which are slowly released with time.

The present applicant has now discovered a process for recovering CFCs or HCFCs adsorbed on expanded polymeric matrices, in particular rigid polyurethane foams, which enables their content to be reduced to truly negligible concentrations.

The present invention therefore provides a process for recovering expanding agents of chlorofluoroalkane (CFC, HCFC) type adsorbed on expanded polymeric matrices consisting essentially of rigid polyurethane foams for recycling, comprising treating said foams in granular form with a gas consisting essentially of carbon dioxide, under supercritical conditions.

According to a preferred embodiment of the process of the present invention, the polyurethane foam has a particle size of between 100 microns and 5 cm, and is obtained by grinding the foam in conventional grinders provided with exhausters for collecting the unadsorbed CFCs or HCFCs retained within the individual cells of the foam.

The material granulated in this manner and discharged from the extraction reactor is treated with supercritical CO₂ for a time of between 30 minutes and 10 hours. The extraction process can be discontinuous or semi-continuous. In this latter case, the solid part is fed discontinuously to the reactor and is flushed with CO₂, within a flow rate ranging from 0.1 l/h to 100 l/h, the throughput of which is such as to achieve the aforesaid contact times.

The carbon dioxide can be used either alone or in combination with other co-solvents and/or entrainers. In this latter case the co-solvents are present in a quantity of up to 10 wt% on the total.

Examples of co-solvents are alcohols such as methanol or ethanol; ketones such as acetone, methylethylketone, tetrahydrofuran; ethers such as diethyl ether, methyl-tert.butyl ether, etc.

The operating conditions require the temperature of the extraction system to be maintained at at least 35°C and the pressure at at least 75 atm. It is however preferable to operate at a temperature of between 35 and 100°C and a pressure of between 75 and 250 atm.

On termination of extraction, the extract contained in the solution consisting of the supercritical phase is recovered by reducing either the pressure or temperature or by adjusting both these system parameters.

Some illustrative but non-limiting examples are given hereinafter for a better understanding of the invention and to enable it to be implemented in practice.

The examples use as raw material a ground rigid polyurethane foam obtained by polymerizing MDI with low molecular weight polyols in the presence of conventional catalysts (tin octoate).

### EXAMPLE 1

A sample in the form of a single 4 g piece of polyurethane foam with a freon 11 content of about 15 wt% is placed in the extractor in a controlled CO₂ atmosphere. The extractor is then fed with 230 g of carbon dioxide and the temperature raised to 60°C, the pressure being raised to 150 atm.

After 30 minutes thermal equilibrium is attained and the system is gradually depressurized to atmospheric pressure, the extracted fluid being fed to a gas chromatograph for determining the extracted freon quantity. By means of this initial extraction, 8.6 wt% of the initially present freon is recovered from the polymeric matrix.

The extractor is then fed with a further 230 g of carbon dioxide for a second extraction using the previously described conditions and procedure. Analysis by gas chromatography indicates that a further 6.2% of freon has been extracted.

The weight loss of the extracted sample accords with the quantity calculated by gas chromatography analysis and indicates a total freon quantity extracted from the polymeric matrix of 14.8%.

### EXAMPLE 2

The same experimental conditions and extraction procedure were used on 5.32 g of a sample originating from mechanical treatment for eliminating chlorofluorocarbons and in the form of a polyurethane foam powder with an average particle size of 100 microns.

Gas chromatography analysis shows excellent agreement with the weight loss of the sample under examination, namely 4.3 wt%.

A second extraction effected on the sample under examination showed a residual freon quantity of less than 1 ppm.

### EXAMPLE 3

A 1.210 g single piece of polyurethane foam expanded with freon 11 is placed in the extractor in a controlled CO₂ atmosphere. The extractor is the fed with 200 g of carbon dioxide containing 3.5 wt% of diethyl ether. The temperature is raised to 60°C and the pressure to 130 atm.

After 30 minutes thermal equilibrium is attained and the system is gradually depressurized to atmospheric pressure through a separator maintained at low temperature (-10°C).

When analyzed by gas chromatography the separated liquid fraction shows the presence of freon 11. The weight loss of the extracted sample is 4.1%, corresponding to the freon quantity determined by gas chromatography.

### EXAMPLE 4 (comparison)

Tests were conducted for evaluating the extractive capacity of liquid CO₂ on samples with a freon content as in Example 1. The pressure was 60 atm and the temperature 25°C.

In this case the initial extraction removed 6% of freon and the second extraction 2.8%, for a total of 8.8%, as verified gravimetrically.

### EXAMPLE 5 (comparison)

Tests were conducted for evaluating the extractive capacity of nitrogen (supercritical) on the same samples as Example 1.

The initial treatment extracted 2.1% of freon from the polymeric matrix, while the second extraction showed only traces of chlorofluorocarbon in the extract phase. Again in this case the gravimetric data agreed with the gas chromatography determinations.

### EXAMPLE 6

A series of experimental tests was conducted in a system in which the foams were subjected to continuous extraction, at constant throughputs, by means of CO₂ at 60°C and a pressure of 150 atm. A 0.3 g foam sample in the form of a single piece is extracted with a CO₂ throughput of 4 l/h. After 11.2 litres of CO₂ had passed a 7.4% weight loss of the extracted sample was determined. After 35 litres of CO₂ had passed there were no appreciable traces of freon in the extract phase. The total weight loss of the extracted sample was 10.1%.

### EXAMPLE 7

A 0.3 g foam sample with an average particle size of 2 mm is extracted with a CO₂ throughput of 4 l/h. After 8 litres of CO₂ had passed a 5.5% weight loss of the extracted sample was determined.

After 24 litres of CO₂ had passed there were no appreciable traces of freon in the extract phase. The total weight loss of the extracted sample was 7.3%.

### EXAMPLE 8

A 2.610 g foam sample with an average particle size of 100 mm is extracted with a CO₂ throughput of 4 l/h. After 11 litres of CO₂ had passed there were no appreciable traces of freon in the extract phase. The total weight loss of the extracted sample was 4.3%.

### EXAMPLE 9

A sample in the form of a single 0.334 g. piece of polyurethane foam with HCFC (141b) is placed in the extractor in a controlled CO₂ atmosphere and extracted at constant throughput at 50°C and 100 atm. After five minutes the thermal equilibrium is attained and the system is fed with CO₂ (flow rate 1 l/h). After 0.5 l of CO₂ had passed a 10.2% weight loss of the extracted sample was determined. After the first extraction, the already extracted sample was extracted again in the same conditions as before. Neither peaks were gaschromatographically revealed nor weight loss was observed.

### EXAMPLE 10

A 0.732 g. foam sample with an average particle size of 5 mm is extracted, at the same conditions of Example 9, with CO₂ (flow rate 1 l/h). After 0.5 l of CO₂ had passed there were no appreciable traces of HCFC in the extracted phase. The total weight loss of the extracted sample was 7.2%.

### EXAMPLE 11

A sample in the form of a single 0.416 g. piece of polyurethane foam with HCFC (141b) is placed in the extractor in a controlled CO₂ atmosphere. The extractor is fed with carbon dioxide containing 6% of propane. The temperature is raised to 50°C and the pressure to 100 atm. After five minutes the thermal equilibrium is attained and the system is fed with fresh mixture (flow rate 1 l/h). After 0.25 l of mixture had passed a 4.1% weight loss of the extracted sample was determined. At the end of the extraction no evidence of HCFC was gaschromatographically revealed.

### EXAMPLE 12

A 0.685 g. foam sample with an average particle size of 5 mm with HCFC (141b) is placed in the extractor in a controlled CO₂ atmosphere. The extractor is fed with carbon dioxide containing 6% of propane. The temperature is raised to 50°C and the pressure to 100 atm. After five minutes the thermal equilibrium is attained and the system is fed with fresh mixture (flow rate 1 l/h). After 0.25 l of mixture had passed a 3.9% weight loss of the extracted sample was determined. At the end of the extraction no evidence of HCFC was gaschromatographically revealed.

## Claims

1. A process for recovering expanding agents of chlorofluoroalkane (CFC, HCFC) type adsorbed on expanded polymeric matrices consisting essentially of rigid polyurethane foams for recycling, comprising treating said foams in granular form with a gas consisting essentially of carbon dioxide, under supercritical conditions.

2. A process as claimed in claim 1, wherein the polyurethane foam has a particle size of between 100 microns and 5 cm.

3. A process as claimed in claim 1 or 2, wherein the granulated foam is treated with supercritical CO₂ for a tame of between 30 minutes and 10 hours.

4. A process as claimed in any one of the preceding claims, wherein the extraction is conducted discontinuously or semicontinuously.

5. A process as claimed in any one of the preceding claims, wherein supercritical CO₂ is flushed with a flow rate ranging from 0.1 to 100 l/h.

6. A process as claimed in any one of the preceding claims, wherein the carbon dioxide is used in combination with other co-solvents and/or entrainers.

7. A process as claimed in claim 5, wherein the co-solvents are present in a quantity of up to 10 wt% on the total.

8. A process as claimed in any one of the preceding claims, wherein the extraction operating conditions are an extraction system temperature maintained at at least 35°C and a pressure of at least 75 atm.
